(19) Europäisches Patentamt / European Patent Office / Office européen des brevets

(11) **EP 4 318 804 B1**

(12) **EUROPEAN PATENT SPECIFICATION**

(45) Date of publication and mention
of the grant of the patent:
**30.04.2025 Bulletin 2025/18**

(51) International Patent Classification (IPC):
**H01Q 5/42** (2015.01)   **H01Q 13/10** (2006.01)
**H01Q 21/06** (2006.01)

(21) Application number: **22778285.1**

(22) Date of filing: **06.01.2022**

(52) Cooperative Patent Classification (CPC):
**H01Q 5/42; H01Q 13/106; H01Q 21/064;
H01Q 21/065;** Y02D 30/70

(86) International application number:
**PCT/CN2022/070561**

(87) International publication number:
**WO 2022/206096 (06.10.2022 Gazette 2022/40)**

(54) **DOUBLE-FREQUENCY SHARED-APERTURE ANTENNA STRUCTURE AND ANTENNA ARRAY PLANE**

ANTENNENSTRUKTUR MIT GEMEINSAMER DOPPELFREQUENZAPERTUR UND GRUPPENANTENNENEBENE

STRUCTURE D'ANTENNE À OUVERTURE PARTAGÉE À DOUBLE FRÉQUENCE ET PLAN DE RÉSEAU D'ANTENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2021   CN 202110337234**

(43) Date of publication of application:
**07.02.2024   Bulletin 2024/06**

(73) Proprietor: **Chengdu T-Ray Technology Co., Ltd.
Chengdu, Sichuan 610015 (CN)**

(72) Inventors:
• **WU, Zubing**
  **Chengdu, Sichuan 610015 (CN)**
• **GUO, Fanyu**
  **Chengdu, Sichuan 610015 (CN)**
• **XU, Fengkai**
  **Chengdu, Sichuan 610015 (CN)**
• **ZHU, Lei**
  **Chengdu, Sichuan 610015 (CN)**

(74) Representative: **Caspary, Karsten et al
Kroher-Strobel
Rechts- und Patentanwälte PartmbB
Bavariaring 20
80336 München (DE)**

(56) References cited:
**CN-A- 110 112 573    CN-A- 110 707 427
CN-A- 111 786 133    CN-A- 111 786 133
CN-A- 112 736 449    US-A1- 2019 089 057
US-A1- 2020 076 086**

**Description**

## FIELD OF THE DISCLOSURE

The present disclosure relates to the field of antenna technology, and more particularly to a dual-frequency shared-aperture antenna structure and an antenna array.

## BACKGROUND OF THE DISCLOSURE

In communications, the system is typically divided into a receiving antenna and transmitting antenna, while the operating frequencies of the receiving and transmitting antennas belong to two different frequency bands. The conventional design method incudes dividing the receiving antenna and the transmitting antenna into two antennas for design, and finally placing them on one aperture surface, so that the antennas have a large footprint, and their application scenarios are restricted.

US 2019/089057 Al discloses an antenna array comprising a plurality of concentric low-frequency elements, with each low-frequency element circumscribing a first high-frequency element. Additionally, the disclosure presents a plurality of second high-frequency elements distributed among the plurality of concentric low-frequency elements, with the objective of maintaining optimal electrical spacing between both the low-frequency elements and the high-frequency elements at two disparate frequencies. CN 111 786 133 A describes an array antenna which comprises a printed circuit board (PCB) multilayer structure, where the front surface of the PCB multilayer structure comprises an antenna unit, a feed network and a multifunctional multi-channel welding chip are arranged on the back surface. The middle layers are used for routing radio frequency signals, feeding chips and controlling the circuitry. A plurality of transceiving dual-frequency antennas are arranged on the PCB multilayer structure in an array manner. A single-frequency transmitting antenna is positioned centrally within the array of transmitting-receiving double-frequency antennas on the PCB multilayer board. Radio frequency transmitting antennas are located on the upper layers of the aforementioned array. The PCB multilayer board further incorporates an isolation cavity structure, which serves to segregate the transceiving double-frequency antennas and the transmitting single-frequency antenna.

The prior art antennas suffer from a large footprint and restricted application scenarios.

## SUMMARY OF THE DISCLOSURE

An object of the present disclosure is to provide a dual-frequency shared-aperture antenna structure and an antenna array to address the problems of a large footprint and restricted application scenarios existing in the prior art.

In order to achieve the object above, the technical solutions employed in the embodiments of the present disclosure are as follows.

In one aspect, an embodiment of the present disclosure provides a dual-frequency shared-aperture antenna structure, comprising: a first metal layer, a first dielectric layer, a second metal layer, a second dielectric layer and a third metal layer, the first metal layer, the first dielectric layer, the second metal layer, the second dielectric layer and the third metal layer being connected layer by layer, the second metal layer being configured to be grounded, and the first metal layer and the second metal layer each comprising a metal hole plated with metal and being connected said metal hole.

In the antenna structure, the first metal layer is provided with a plurality of penetrating slits to define a plurality of first high-frequency antennas and low-frequency antennas through the slits, the low-frequency antennas surrounding the first high-frequency antennas, and the low-frequency antennas having an operating frequency smaller than that of the first high-frequency antennas.

The slits further define a plurality of second high-frequency antennas, the second high-frequency antennas being provided at a distance from the low-frequency antennas, and the first high-frequency antennas and the second high-frequency antenna having a same operating frequency.

The low-frequency antennas are arranged in a rectangular array, each of the second high-frequency antennas is located at a geometric center of four adjacent low-frequency antennas, and a spacing between two adjacent low-frequency antennas satisfies the following formula:

$$d_1 < \lambda_1/(1+|\cos(\theta_1)|)$$

Among them, $d_1$ denotes a geometric center spacing between two adjacent low-frequency antennas, $\lambda_1$ denotes a wavelength of low-frequency antenna operating frequency in free space, and $\theta_1$ denotes a scanning angle of the low-frequency antennas.

A geometric center spacing between two adjacent first high-frequency antennas or a spacing between two adjacent second high-frequency antennas satisfies the following formula:

$$d_2 < \frac{\sqrt{2}}{2}\lambda_2/(1+|\cos(\theta_2)|)$$

wherein, $d_2$ denotes a geometric center spacing between two adjacent first high-frequency antennas or between two adjacent second high-frequency antennas, the geometric center spacing between two adjacent first high-frequency antennas being equal to that between two adjacent second high-frequency antennas, $\lambda_2$ denotes

a wavelength of the operating frequency of the first high-frequency antennas or the second high-frequency antennas in free space, the wavelength of the first high-frequency antenna operating frequency in free space being equal to that of the second high-frequency antenna operating frequency in free space, and $\theta_2$ denotes a scanning angle of the first high-frequency antennas or the second high-frequency antennas.

Optionally, there are a plurality of metal holes, the plurality of metal holes surrounding the slits and disposed at a distance therefrom.

Optionally, a distance between two adjacent metal holes is smaller than 1/10 of a free operating wavelength of the second high-frequency antennas.

Optionally, the geometric centers of the first high-frequency antennas and the low-frequency antennas overlap.

Optionally, the slits have a width greater than 0.1 mm.

Optionally, the metal holes have a diameter greater than 0.1 mm.

Optionally, the shapes of the first high-frequency antennas and the low-frequency antennas both include a circle and a regular polygon.

In another aspect, the present disclosure further provides an antenna array comprising a dual-frequency shared-aperture antenna structure described above.

Relative to the prior art, the present disclosure enjoys the following beneficial effects.

Through the dual-frequency shared-aperture antenna structure provided in the present disclosure, a nested arrangement of first high-frequency antennas and low-frequency antennas is achieved, and the antennas of two frequency bands are arranged on a same metal layer, thereby making the antenna apertures highly efficient, the footprint of the dual-frequency antennas smaller and the structure simpler.

In order to make the above objects, features and advantages of the present disclosure more apparent, preferred embodiments are exemplified below and are described in detail as follows in conjunction with the accompanying drawings.

## BRIEF DESCRIPTION OF THE DRAWINGS

In order to more clearly illustrate the technical solutions of the embodiments of the present disclosure, the accompanying drawings to be used in the embodiments will be briefly introduced below. It should be understood that the following figures are only illustrative of certain embodiments of the present disclosure,. The scope of the invention is limited by its independent claim.

FIG. 1 is a schematic cross-sectional view of a dual-frequency shared-aperture antenna structure according to an embodiment of the present disclosure.
FIG. 2 is a top view of a first metal layer according to an embodiment of the present disclosure.

Reference numbers in the figures include: 100-dual-frequency shared-aperture antenna structure; 110-first metal layer; 120-first dielectric layer; 130-second metal layer; 140-second dielectric layer; 150-third metal layer; 160-metal hole; 111-slit; 112-first high-frequency antenna; 113-low-frequency antenna; 114-second high-frequency antenna.

## DETAILED IMPLEMENTATION OF THE DISCLOSURE

In order to make the objects, technical solutions and advantages of the embodiments of the present disclosure clearer, the technical solutions in the embodiments of the present disclosure will be clearly and completely described below in conjunction with the accompanying drawings. Apparently, the embodiments described herein are some, but not all, embodiments of the present disclosure. The components in the embodiments of the present disclosure described and illustrated herein may generally be arranged and designed in a variety of different configurations.

Accordingly, the following detailed description of the embodiments of the present disclosure as provided in the accompanying drawings is to indicate selected embodiments of the present disclosure.

It should be noted that like reference numerals and letters refer to like items in the following figures, and thus, once an item is defined in one figure, it need not be further defined and explained in subsequent ones. Moreover, the terms "first", "second" and the like, if any, are used solely to distinguish one from another and are not to be construed as indicating or implying relative importance.

It is to be noted that relational terms such as first and second herein are used only to distinguish one entity or operation from another, and do not necessarily require or imply any such actual relationship or order between those entities or operations. Furthermore, the terms "including", "comprising", or any other variant thereof, are intended to cover non-exclusive inclusion, such that a process, method, article, or apparatus comprising a set of elements includes not only those elements, but also other elements not expressly listed, or elements that are inherent to such process, method, article or apparatus. Without further limitation, the fact that an element is defined by the phrase "comprising a ......" does not preclude the existence of additional identical elements in the process, method, article or apparatus that comprises the element.

In the description of the present disclosure, it should be noted that an orientation or a positional relationship indicated by such terms as "upper", "lower", "inner" and "outer", if any, is based on that shown in the drawings, or that of the product of the present disclosure as it is in use. This is only for ease and simplicity of description, without indicating or implying that the device or the element referred to must have a specific orientation, or be constructed and operated in a particular orientation, and thus it should not be construed as limiting to the present disclosure.

In the description of the present disclosure, it should also be noted that, unless otherwise expressly specified or defined, the terms "provided" and "connected" and the like are to be understood in a broad sense. For example, it may be a fixed connection, a detachable connection, or an integral connection; it may be a mechanical connection or an electrical connection; it may be a direct connection, or an indirect connection through an intermediary, or an internal communication of two elements. For a person of ordinary skill in the art, the specific meanings of these terms in the present disclosure may be understood in specific contexts.

Some embodiments of the present disclosure are described in detail below in conjunction with the accompanying drawings. The following embodiments and features therein may be combined with each other in the absence of conflicts.

As described in the background art, the receiving antenna and the transmitting antenna currently need to be divided into two antennas for independent design, so that the antennas have a large footprint, and their application scenarios are restricted.

In view of this, the present disclosure provides a dual-frequency shared-aperture antenna structure, which realizes aperture sharing of dual-frequency antennas by nesting low-frequency antennas and high-frequency antennas and thus the arrangement of the high-frequency antennas and the low-frequency antennas on a same metal layer, thereby reducing the footprint of the dual-frequency antennas and making the structure relatively simple.

The following is an example of the dual-frequency shared-aperture antenna structure provided in the present disclosure.

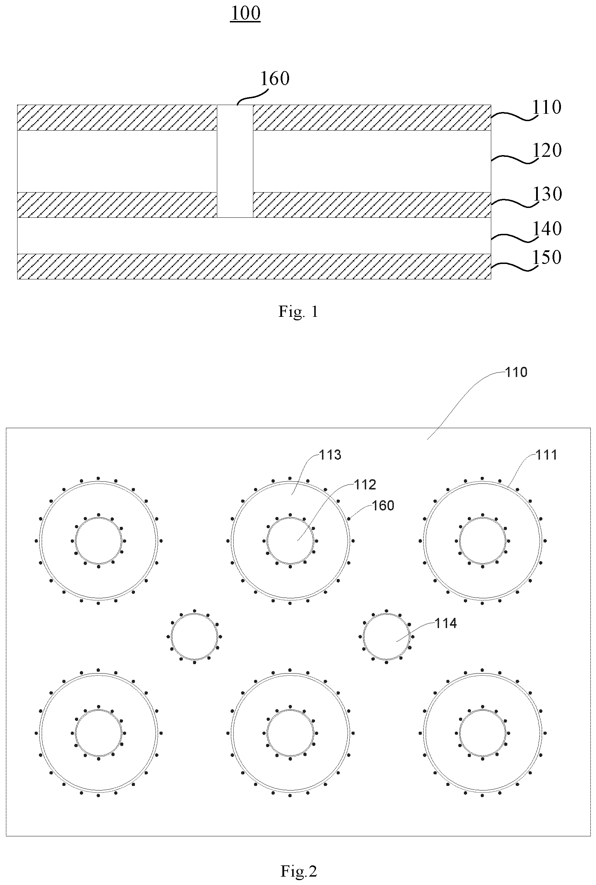

As an implementation, referring to FIG. 1, a dual-frequency shared-aperture antenna structure 100 includes a first metal layer 110, a first dielectric layer 120, a second metal layer 130, a second dielectric layer 140, and a third metal layer 150, the first metal layer 110, the first dielectric layer 120, the second metal layer 130, the second dielectric layer 140, and the third metal layer 150 being connected layer by layer, the second metal layer 130 being grounded, and the first metal layer 110 and the second metal layer 130 being connected via a metal hole 160. Optionally, the metal layer of the present disclosure may be a copper layer; and the dielectric layer of the present disclosure may be a microwave dielectric substrate.

It can be understood that, through this implementation, the first metal layer 110 serves as a surface layer of the entire dual-frequency shared-aperture antenna structure, and the second metal layer 130 serves as a bottom layer ground of the dual-frequency common-aperture antenna structure; since the first metal layer 110 is connected to the second metal layer 130 via the metal hole 160, the first metal layer 110 is also grounded; and the third metal layer 150 serves as a feed network for the dual-frequency shared-aperture antenna structure.

In the actual fabrication process of the metal hole 160, the first metal layer 110, the first dielectric layer, and the second metal layer 130 are first drilled, and a wall of the hole is plated with a metal, such as copper, and so forth, thereby achieving the connection between the first metal layer 110 and the second metal layer 130 through the metal hole 160.

In order to realize the formation of high-frequency antennas and low-frequency antennas on the first metal layer 110, referring to FIG. 2, the first metal layer 110 is provided with a plurality of penetrating slits 111. That is, in an actual process, a plurality of regularly shaped slits 111 may be etched out on the first metal layer 110, and the slits 111 penetrate through the first metal layer 110, through which slits 111 the first dielectric layer 120 is exposed and a plurality of first high-frequency antennas 112 and low-frequency antennas 113 are defined, the low-frequency antennas 113 surrounding the first high-frequency antennas 112, and the low-frequency antennas 113 having an operating frequency smaller than that of the first high-frequency antennas 112.

For example, the first high-frequency antennas 112 and the low-frequency antennas 113 have an operating frequency ratio of 1.5:1. It can be understood that, by providing the first high-frequency antennas 112 and the low-frequency antennas 113, the design of the receiving antenna and the transmitting antenna may be implemented. For example, as one embodiment, the first high-frequency antennas 112 serve as a transmitting antenna, and the low-frequency antennas 113 serve as a receiving antenna, thereby achieving the effect of simultaneously providing the transmitting antenna and the receiving antenna on a same metal layer, such that the antenna structure occupies a smaller volume, and its application scenarios become wider. Of course, in other possible embodiments, the first high-frequency antennas 112 may be used as a receiving antenna, and the low-frequency antennas 113 as a transmitting antenna, without limitation herein.

As an embodiment, in order to make full use of the area of the first metal layer 110, the first metal layer 110 is further provided with a second high-frequency antenna 114, i.e., slits 111 on the first metal layer 110 also define a plurality of second high-frequency antennas 114. The second high-frequency antennas 114 are disposed at a distance from the low-frequency antennas 113, and the first high-frequency antennas 112 and the second high-frequency antennas 114 have a same operating frequency. Disposing at a distance in the present disclosure means that there is no contact between the second high-frequency antennas 114 and the low-frequency antennas 113.

In other words, a low-frequency antenna 113 and a first high-frequency antenna 112 constitute a set of dual-frequency radiating antennas, with the low-frequency antenna 113 provided outside of the first high-frequency antenna 112, while a second high-frequency antenna 114 forms an independent high-frequency antenna, so that two different forms of high-frequency antennas are arranged on the first metal plate, and they have a same operating frequency.

It should be noted that the present disclosure sets no limitations to the shape of the first high-frequency antennas 112, the second high-frequency antennas 114, and the low-frequency antennas 113, as long as it satisfies the requirement that the operating frequencies of the first high-frequency antennas 112 and the second high-frequency antennas 114 are equal to each other, and greater than that of the low-frequency antennas 113. In an implementation, the first high-frequency antennas 112 and the second high-frequency antennas 114 may both be of a circular or regular polygonal shape.

Meanwhile, as an implementation, the geometric centers of the first high-frequency antennas 112 and the low-frequency antennas 113 overlap; taking circular first high-frequency antennas 112 and second high-frequency antennas 114 as an example, a plurality of circular slits 111 may be etched out in the actual fabrication process, so that the first high-frequency antennas 112 and the second high-frequency antennas 114 are formed inside of the circular slits 111. On this basis, the shape of the low-frequency antennas 113 may be ring-shaped. For example, as shown in FIG. 2, in making a set of dual-band radiating antennas, two slits 111, which are respectively a first slit and a second slit, may be etched out on the first metal layer 110, the perimeter of the first slit being larger than that of the second slit, the two slits forming concentric circles, so that the central circular area forms a first high-frequency antenna 112, and the outer ring-shaped area forms a low-frequency antenna 113.

Of course, the low-frequency antenna 113 may be of other shapes. For example, if the shape enclosed by the first slit 111 is square, and the shape enclosed by the second slit 111 is circular, then the first high-frequency antenna 112 is shaped as a circle, and the low-frequency antennas 113 is shaped as a circle on the inner side and a square on the outer side. Alternatively, if the shape enclosed by the first slit 111 is circular and the shape enclosed by the second slit 111 is regular hexagonal, then the first high-frequency antenna 112 is shaped regular hexagonal, and the low-frequency antenna 113 is shaped regular hexagonal on the inner side and circular on the outer side.

In addition, the first high-frequency antennas 112 and the second high-frequency antennas 114 may have same or different shapes; for example, the first high-frequency antennas 112 have a circular shape, and the second high-frequency antennas 114 have a regular pentagonal shape. Of course, the first high-frequency antennas 112 and the second high-frequency antennas 114 may also be of other shapes, such as rectangular or elliptical, etc., which are not limited herein.

It should be noted that, in order to facilitate the fabrication, in the present disclosure, the width of the slit 111 enclosing each antenna is equal, the width thereof being all greater than 0.1 mm. For example, for any of the second high-frequency antennas 114, the width of the slit 111 enclosing the second high-frequency antenna 114 is the same at different positions. In addition, the widths of the slits 111 enclosing different antennas may be different; for example, the width of the slit 111 enclosing the first high-frequency antenna 112 is 0.2 mm, and the width of the slit 111 enclosing the second high-frequency antenna 114 is 0.3 mm, without limitation herein.

To ensure that as many first high-frequency antennas 112, second high-frequency antennas 114, and low-frequency antennas 113 as possible are provided on the first metal layer 110, the low-frequency antennas 113 are arranged in a rectangular array. Meanwhile, to ensure that the array antennas scan to an elevation angle of 30 degrees without grating lobes, each second high-frequency antenna 114 is located at a geometric center of four adjacent low-frequency antennas 113, and a spacing between two adjacent low-frequency antennas 113 satisfies the following formula:

$$d_1 < \lambda_1/(1+|\cos(\theta_1)|)$$

wherein, $d_1$ denotes a geometric center spacing between two adjacent low-frequency antennas, $\lambda_1$ denotes a wavelength of low-frequency antenna operating frequency in free space, and $\theta 1$ denotes an elevation angle of the low-frequency antennas (a scanning angle of the low-frequency antennas). It should be noted that, as shown in FIG. 2, for the geometric center spacing between two adjacent low-frequency antennas herein, it is meant that the formula is to be satisfied both between two transversely adjacent low-frequency antennas and between two vertically adjacent low-frequency antennas. And $\theta_1$ is a maximum radiation direction of the low-frequency antennas.

At the same time, a geometric center spacing between two adjacent first high-frequency antennas or a spacing between two adjacent second high-frequency antennas satisfies the following formula:

$$d_2 < \frac{\sqrt{2}}{2}\lambda_2/(1+|\cos(\theta_2)|)$$

wherein $d_2$ denotes a geometric center spacing between two adjacent first high-frequency antennas or between two adjacent second high-frequency antennas, the geometric center spacing between two adjacent first high-frequency antennas being equal to that between two adjacent second high-frequency antennas, wherein $\lambda_2$

denotes a wavelength of the operating frequency of the first high-frequency antennas or the second high-frequency antennas in free space, the wavelength of the first high-frequency antenna operating frequency in free space being equal to that of the second high-frequency antenna operating frequency in free space, and wherein $\theta_2$ denotes an elevation angle of the first high-frequency antennas or the second high-frequency antennas(a scanning angle of the first high-frequency antennas or the second high-frequency antennas).

It will be appreciated that on the basis of the embodiment in FIG. 2, since a second high-frequency antenna 114 is located at a geometric center of four adjacent low-frequency antennas 113, and at the same time it is also located at a geometric center of four adjacent first high-frequency antennas 112, a spacing between the second high-frequency antenna 114 and any one of the four adjacent first high-frequency antennas 112 needs to satisfy the above mentioned formula.

In an optional implementation, there are a plurality of metal holes 160; for example, the black small circles in FIG. 2 are all metal holes 160, the plurality of metal holes 160 surrounding the slits 111 and disposed at a distance therefrom, i.e., the metal holes 160 are not in contact with the slits 111. It is to be understood that the metal holes 160 provided in the present disclosure may be divided into three types, a first type surrounding the slit 111 that defines the first high-frequency antennas 112, a second type surrounding the slit 111 that defines the second high-frequency antennas 114, and a third type surrounding the slit 111 that defines the low-frequency antennas 113.

In order to improve the isolation between the high-frequency antennas (including the first high-frequency antennas 112 and the second high-frequency antennas 114), between the high-frequency antennas and the low-frequency antennas, and between the low-frequency antennas, a linear distance between the metal holes 160 distributed around a slit 111 is less than 1/10 of the free operating wavelength of the independent high-frequency radiating antennas, i.e., the distance between two adjacent metal holes 160 are less than 1/10 of the free operating wavelength of the second high-frequency antennas 114.

In addition, in order to facilitate the processing of the metal holes 160, as an implementation, the diameter of the metal holes 160 is greater than 0.1 mm, for example, the diameter of the metal holes 160 is 0.3 mm.

On the basis of the above-described implementations, an embodiment of the present disclosure further provides an antenna array that includes the dual-frequency shared-aperture antenna structure as set forth above.

## Claims

1. A dual-frequency shared-aperture antenna structure (100), comprising: a first metal layer (110), a first dielectric layer (120), a second metal layer (130), a second dielectric layer (140) and a third metal layer (150), the first metal layer (110), the first dielectric layer (120), the second metal layer (130), the second dielectric layer (140) and the third metal layer (150) being connected layer by layer, the second metal layer (130) being configured to be grounded, and the first metal layer (110) and the second metal layer (130) comprising a metal hole (160) plated with metal and being connected via said metal hole (160),

wherein the first metal layer (110) is provided with a plurality of penetrating slits (111) to define a plurality of first high-frequency antennas (112) and low-frequency antennas (113) through the slits (111), the low-frequency antennas (113) surrounding the first high-frequency antennas (112), and the low-frequency antennas (113) having an operating frequency smaller than that of the first high-frequency antennas (112),
wherein the slits (111) further define a plurality of second high-frequency antennas (114), the second high-frequency antennas (114) being provided at a distance from the low-frequency antennas (113), and the first high-frequency antennas (112) and the second high-frequency antennas (114) having a same operating frequency, and
wherein the low-frequency antennas (113) are arranged in a rectangular array, each of the second high-frequency antennas (114) being located at a geometric center of four adjacent low-frequency antennas (113), and a spacing between two adjacent low-frequency antennas (113) satisfying the following formula:

$$d_1 < \lambda_1/(1+|\cos(\theta_1)|)$$

where $d_1$ denotes a geometric center spacing between two adjacent low-frequency antennas (113), $\lambda_1$ denotes a wavelength of low-frequency antenna (113) operating frequency in free space, and $\theta_1$ denotes a scanning angle of the low-frequency antennas (113),
wherein a geometric center spacing between two adjacent first high-frequency antennas (112) or a spacing between two adjacent second high-frequency antennas (114) satisfies the following formula:

$$d_2 < (\sqrt{2}/2)\lambda_2/(1+|\cos(\theta_2)|)$$

where $d_2$ denotes a geometric center spacing between two adjacent first high-frequency antennas (112) or between two adjacent second high-frequency antennas (114), the geometric center spacing between two adjacent first high-frequency antennas (112) being equal to that between two adjacent second high-frequency antennas (114), $\lambda_2$ denotes a wavelength of the operating frequency of the first high-frequency antennas (112) or the second high-frequency antennas (114) in free space, the wavelength of the first high-frequency antenna (112) operating frequency in free space being equal to that of the second high-frequency antenna (114) operating frequency in free space, and $\theta_2$ denotes a scanning angle of the first high-frequency antennas (112) or the second high-frequency antennas (114).

2. The dual-frequency shared-aperture antenna structure (100) according to claim 1, wherein there are a plurality of metal holes (160), the plurality of metal holes (160) surrounding the slits (111) and disposed at a distance therefrom.

3. The dual-frequency shared-aperture antenna structure (100) according to claim 2, wherein a distance between two adjacent metal holes (160) is smaller than 1/10 of an operating wavelength of the first or second high-frequency antennas (112, 114) in free space.

4. The dual-frequency shared-aperture antenna structure (100) according to claim 1, wherein the geometric centers of the first high-frequency antennas (112) and the low-frequency antennas (113) overlap.

5. The dual-frequency shared-aperture antenna structure (100) according to claim 1, wherein the slits (111) have a width greater than 0.1 mm.

6. The dual-frequency shared-aperture antenna structure (100) according to claim 1, wherein the metal holes (160) have a diameter greater than 0.1 mm.

7. The dual-frequency shared-aperture antenna structure (100) according to claim 1, wherein the shapes of the first high-frequency antennas (112) and the low-frequency antennas (113) both include a circle and a regular polygon.

8. An antenna array comprising a dual-frequency shared-aperture antenna structure (100) according to any one of claims 1 to 7.


**Patentansprüche**

1. Dualfrequenz-Mehrfachapertur-Antennenstruktur (100 mit: einer ersten Metallschicht (110), einer ersten dielektrischen Schicht (120), einer zweiten Metallschicht (130), einer zweiten dielektrischen Schicht (140) und einer dritten Metallschicht (150), wobei die erste Metallschicht (110), die erste dielektrische Schicht (120), die zweite Metallschicht (130), die zweite dielektrische Schicht (140) und die dritte Metallschicht (150) schichtweise miteinander verbunden sind, die zweite Metallschicht (130) dazu eingerichtet ist, geerdet zu sein, und die erste Metallschicht (110) sowie die zweite Metallschicht (130) ein mit Metall plattiertes Metallloch (160) aufweisen und über das Metallloch (160) miteinander verbunden sind,

wobei die erste Metallschicht (110) mit einer Vielzahl von durchgehenden Schlitzen (111) versehen ist, um eine Vielzahl von ersten Hochfrequenzantennen (112) und Niederfrequenzantennen (113) durch die Schlitze (111) zu definieren, wobei die Niederfrequenzantennen (113) die ersten Hochfrequenzantennen (112) umgeben und die Niederfrequenzantennen (113) eine Betriebsfrequenz aufweisen, die kleiner ist als die der ersten Hochfrequenzantennen (112),
wobei die Schlitze (111) des Weiteren eine Vielzahl von zweiten Hochfrequenzantennen (114) definieren, wobei die zweiten Hochfrequenzantennen (114) in einem Abstand zu den Niederfrequenzantennen (113) angeordnet sind und die ersten Hochfrequenzantennen (112) sowie die zweiten Hochfrequenzantennen (114) eine gleiche Betriebsfrequenz aufweisen, und
wobei die Niederfrequenzantennen (113) in einem rechteckigen Raster angeordnet sind, jede der zweiten Hochfrequenzantennen (114) sich an einem geometrischen Mittelpunkt von vier benachbarten Niederfrequenzantennen (113) befindet und ein Abstand zwischen zwei benachbarten Niederfrequenzantennen (113) die folgende Formel erfüllt:

$$d_1 < \lambda_1 / (1 + |\cos(\theta_1)|)$$

wobei $d_1$ den geometrischen Mittelpunktabstand zwischen zwei benachbarten Niederfrequenzantennen (113) bezeichnet, $\lambda_1$ die Wellenlänge der Betriebsfrequenz der Niederfrequenzantenne (113) im freien Raum bezeichnet und $\theta_1$ den Scanwinkel der Niederfrequenzantennen (113) bezeichnet,
wobei ein geometrischer Mittelpunktabstand zwischen zwei benachbarten ersten Hochfrequenzantennen (112) oder ein Abstand zwischen zwei benachbarten zweiten Hochfrequenzantennen (114) die folgende Formel erfüllt:

$$d_2 < (\sqrt{2}/2)\, \lambda_2\, /\, (1 + |\cos(\theta_2)|)$$

wobei $d_2$ den geometrischen Mittelpunktabstand zwischen zwei benachbarten ersten Hochfrequenzantennen (112) oder zwischen zwei benachbarten zweiten Hochfrequenzantennen (114) bezeichnet, wobei der geometrische Mittelpunktabstand zwischen zwei benachbarten ersten Hochfrequenzantennen (112) gleich dem zwischen zwei benachbarten zweiten Hochfrequenzantennen (114) ist, $\lambda_2$ die Wellenlänge der Betriebsfrequenz der ersten Hochfrequenzantennen (112) oder der zweiten Hochfrequenzantennen (114) im freien Raum bezeichnet, wobei die Wellenlänge der Betriebsfrequenz der ersten Hochfrequenzantennen (112) im freien Raum gleich der der Betriebsfrequenz der zweiten Hochfrequenzantennen (114) im freien Raum ist, und $\theta_2$ den Scanwinkel der ersten Hochfrequenzantennen (112) oder der zweiten Hochfrequenzantennen (114) bezeichnet.

2. Dualfrequenz-Mehrfachapertur-Antennenstruktur (100) nach Anspruch 1, wobei eine Vielzahl von Metalllöchern (160) vorhanden ist, wobei die Vielzahl von Metalllöchern (160) die Schlitze (111) umgeben und in einem Abstand zu diesen angeordnet sind.

3. Dualfrequenz-Mehrfachapertur-Antennenstruktur (100) nach Anspruch 2, wobei ein Abstand zwischen zwei benachbarten Metalllöchern (160) kleiner als 1/10 der Betriebswellenlänge der ersten oder zweiten Hochfrequenzantennen (112, 114) im freien Raum ist.

4. Dualfrequenz-Mehrfachapertur-Antennenstruktur (100) nach Anspruch 1, wobei die geometrischen Mittelpunkte der ersten Hochfrequenzantennen (112) und der Niederfrequenzantennen (113) übereinstimmen.

5. Dualfrequenz-Mehrfachapertur-Antennenstruktur (100) nach Anspruch 1, wobei die Schlitze (111) eine Breite von mehr als 0,1 mm aufweisen.

6. Dualfrequenz-Mehrfachapertur-Antennenstruktur (100) nach Anspruch 1, wobei die Metalllöcher (160) einen Durchmesser von mehr als 0,1 mm aufweisen.

7. Dualfrequenz-Mehrfachapertur-Antennenstruktur (100) nach Anspruch 1, wobei die Formen der ersten Hochfrequenzantennen (112) und der Niederfrequenzantennen (113) sowohl einen Kreis als auch ein reguläres Polygon umfassen.

8. Antennenarray mit einer Dualfrequenz-Mehrfachapertur-Antennenstruktur (100) nach einem der Ansprüche 1 bis 7.

## Revendications

1. Structure d'antenne à ouverture partagée à double fréquence (100), comprenant : une première couche métallique (110), une première couche diélectrique (120), une deuxième couche métallique (130), une deuxième couche diélectrique (140) et une troisième couche métallique (150), la première couche métallique (110), la première couche diélectrique (120), la deuxième couche métallique (130), la deuxième couche diélectrique (140) et la troisième couche métallique (150) étant connectées couche par couche, la deuxième couche métallique (130) étant configurée pour être mise à la terre, et la première couche métallique (110) et la deuxième couche métallique (130) comprenant un trou métallique (160) plaqué de métal et étant connectées via ledit trou métallique (160),

dans laquelle la première couche métallique (110) est pourvue d'une pluralité de fentes pénétrantes (111) pour définir une pluralité de premières antennes haute fréquence (112) et d'antennes basse fréquence (113) à travers les fentes (111), les antennes basse fréquence (113) entourant les premières antennes haute fréquence (112), et les antennes basse fréquence (113) ayant une fréquence de fonctionnement inférieure à celle des premières antennes haute fréquence (112),

dans laquelle les fentes (111) définissent en outre une pluralité de deuxièmes antennes haute fréquence (114), les deuxièmes antennes haute fréquence (114) étant pourvues à distance des antennes basse fréquence (113), et les premières antennes haute fréquence (112) et les deuxièmes antennes haute fréquence (114) ayant une même fréquence de fonctionnement, et

dans laquelle les antennes basse fréquence (113) sont agencées dans un réseau rectangulaire, chacune des deuxièmes antennes haute fréquence (114) étant située au centre géométrique de quatre antennes basse fréquence adjacentes (113), et un espacement entre deux antennes basse fréquence adjacentes (113) satisfaisant à la formule suivante :

$$d_1 < \lambda_1 / (1 + |\cos(\theta_1)|)$$

où $d_1$ désigne un espacement de centres géométriques entre deux antennes basse fréquence adjacentes (113), $\lambda_1$ désigne une lon-

gueur d'onde de la fréquence de fonctionnement de l'antenne basse fréquence (113) dans l'espace libre, et $\theta_1$ désigne un angle de balayage des antennes basse fréquence (113), dans laquelle un espacement de centres géométriques entre deux premières antennes haute fréquence adjacentes (112) ou un espacement entre deux deuxièmes antennes haute fréquence adjacentes (114) satisfait à la formule suivante :

$$d_2 < (\sqrt{2}/2)\lambda_2/(1+|\cos(\theta_2)|)$$

où $d_2$ désigne un espacement de centres géométriques entre deux premières antennes haute fréquence adjacentes (112) ou entre deux deuxièmes antennes haute fréquence adjacentes (114), l'espacement de centres géométriques entre deux premières antennes haute fréquence adjacentes (112) étant égal à celui entre deux deuxièmes antennes haute fréquence adjacentes (114), $\lambda_2$ désigne une longueur d'onde de la fréquence de fonctionnement des premières antennes haute fréquence (112) ou des deuxièmes antennes haute fréquence (114) dans l'espace libre, la longueur d'onde de la fréquence de fonctionnement de la première antenne haute fréquence (112) dans l'espace libre étant égale à celle de la fréquence de fonctionnement de la deuxième antenne haute fréquence (114) dans l'espace libre, et $\theta_2$ désigne un angle de balayage des premières antennes haute fréquence (112) ou des deuxièmes antennes haute fréquence (114).

2. Structure d'antenne à ouverture partagée à double fréquence (100) selon la revendication 1, dans laquelle il y a une pluralité de trous métalliques (160), les trous de la pluralité de trous métalliques (160) entourant les fentes (111) et étant disposés à une certaine distance de celles-ci.

3. Structure d'antenne à ouverture partagée à double fréquence (100) selon la revendication 2, dans laquelle une distance entre deux trous métalliques adjacents (160) est inférieure à 1/10 d'une longueur d'onde de fonctionnement des premières ou deuxièmes antennes haute fréquence (112, 114) dans l'espace libre.

4. Structure d'antenne à ouverture partagée à double fréquence (100) selon la revendication 1, dans laquelle les centres géométriques des premières antennes haute fréquence (112) et des antennes basse fréquence (113) se chevauchent.

5. Structure d'antenne à ouverture partagée à double fréquence (100) selon la revendication 1, dans laquelle les fentes (111) ont une largeur supérieure à 0,1 mm.

6. Structure d'antenne à ouverture partagée à double fréquence (100) selon la revendication 1, dans laquelle les trous métalliques (160) ont un diamètre supérieur à 0,1 mm.

7. Structure d'antenne à ouverture partagée à double fréquence (100) selon la revendication 1, dans laquelle les formes des premières antennes haute fréquence (112) et des antennes basse fréquence (113) comprennent toutes deux un cercle et un polygone régulier.

8. Réseau d'antennes comprenant une structure d'antenne à ouverture partagée à double fréquence (100) selon l'une quelconque des revendications 1 à 7.

100

160

110
120
130
140
150

Fig. 1

110

113
112
160
111

114

Fig.2

## REFERENCES CITED IN THE DESCRIPTION

**Patent documents cited in the description**

- US 2019089057 A1
- CN 111786133 A